# EUROPÄISCHE PATENTSCHRIFT

(11) **EP 2 155 465 B1**
(45) Veröffentlichungstag und Bekanntmachung des Hinweises auf die Patenterteilung: **13.04.2016**
(21) Anmeldenummer: 08716329.1
(22) Anmeldetag: 07.03.2008
(51) Int. Cl.: B29C 47/38, B05C 17/005

(54) **EXTRUDERSCHWEISSEINRICHTUNG**
EXTRUDER WELDING DEVICE
DISPOSITIF DE SOUDAGE PAR EXTRUSION

(30) Priorität: 22.05.2007 DE 202007007282 U
(43) Veröffentlichungstag der Anmeldung: 24.02.2010
(73) Patentinhaber: Leister Technologies AG, 6056 Kägiswil (CH)
(72) Erfinder: DI MICELI, Giuseppe, CH-5737 Menzikon (CH); VON WYL, Bruno, CH-6056 Kägiswil (CH)
(74) Vertreter: Klocke, Peter
(86) Internationale Anmeldenummer: PCT/EP2008/001814
(87) Internationale Veröffentlichungsnummer: WO 2008/141685

(56) Entgegenhaltungen:
- EP-A- 0 594 889
- EP-A- 0 887 116
- DE-U1- 29 812 550
- DE-U1- 29 915 768
- US-A- 5 005 731
- US-B1- 6 230 936
- ANONYMOUS: "A range of leister hand-held and automatic welders from techspan" FERRET PRODUCT NEWS, [Online] 12. Dezember 2006 (2006-12-12), XP002493833 Gefunden im Internet: URL:http://www.ferret.com.au/c/Techspan-Gr oup/A-range-of-Leister-hand-held-and-autom atic-welders-from-Techspan-n667443> [gefunden am 2008-08-29]

## Beschreibung

Die Erfindung betrifft einen Handschweißextruder zum Verschweißen von thermoplastischen Kunststoffmaterialien mittels einem plastifizierten Kunststoffstrang, mit einer mobilen Schweißeinheit und eine quasi-stationäre Versorgungseinheit, die entfernt voneinander vorgesehen und mittels flexibler Verbindungsleitungen miteinander verbunden oder verbindbar sind, wobei die Schweißeinheit eine Plastifizierschneckeneinheit und einen Antriebsmotor, die über ein Getriebe miteinander verbunden sind und eine Heißlufterzeugungseinrichtung mit externer Luftversorgung aufweist, die in einem gemeinsamen Gehäuse der Schweißeinheit angeordnet sind, und wobei die Versorgungseinheit Steuer- und/oder Regeleinrichtungen für die Versorgung der Plastifizierschneckeneinheit und/oder der Heißlufterzeugungseinrichtung und/oder dem Antriebsmotor aufweist.

Derartige Schweißgeräte sind in den verschiedensten Ausführungsformen bekannt. Sie werden zum sogenannten Extrusionsschweißen, d. h. zum stoffschlüssigen Verbinden von Kunststoffmaterialien verwendet. Bekannte Extruderschweißgeräte weisen eine beheizbare Plastifizierschneckeneinheit auf, der ein Schweißdraht aus thermoplastischem Kunststoffmaterial zugeführt wird. Die Plastifizierschneckeneinheit erhitzt den Schweißdraht und fördert diesen als plastifizierten Kunststoffstrang mit einer Extruderschnecke über einen Schweißschuh mit einer Austrittsdüse an dem vorderen Ende der Plastifizierschneckeneinheit an die Schweißstelle. Gleichzeitig werden die Kunststoffmaterialien in einem Bereich um die jeweilige Schweißstelle mit Heißluft erwärmt. Dazu weist das Extruderschweißgerät üblicherweise eine integrierte Heißlufterzeugungseinrichtung mit Eigen- oder Fremdluftversorgung auf, das einen zugeführten Kaltluftstrom erhitzt und die zu verschweißende Stelle der Kunststoffmaterialien mit Hilfe einer Vorwärmdüse mit einem Heißluftstrahl beaufschlagt.

Die Heißlufterzeugungseinrichtung und die Plastifizierschneckeneinheit weisen üblicherweise voneinander getrennte regelbare Heizungen auf, so dass die Temperatur der Heißluft und des plastifizierten Kunststoffstranges für optimale Schweißbedingungen unabhängig voneinander einstellbar sind. Die Extruderschnecke der Plastifizierschneckeneinheit ist drehangetrieben. Dazu ist eine Welle der Extruderschnecke mit einer drehzahlregelbaren Antriebseinheit verbunden, deren Antriebsmotor über ein Getriebe die Extruderschnecke antreibt. Bei bekannten Extruderschweißgeräten ist man bei der Konstruktion von Handbohrmaschinen ausgegangen, die durch eine Plastifizierschneckeneinheit und eine Heißlufterzeugungseinrichtung ergänzt worden sind. Dabei sind die Heißlufterzeugungseinrichtung und die Plastifizierschneckeneinheit fest miteinander verbunden und als auf die Bohrmaschine abnehmbar aufgesetztes Vorsatzgerät ausgebildet.

Dementsprechend weisen herkömmliche Handschweißextruder die typische "Bohrmaschinenform" auf, mit einem von der Längsachse der Bohrmaschine seitlich abstehenden Bohrmaschinengriff und einem seitlich von dem Gehäuse des Vorsatzgerätes abstehenden Haltegriff. Beides behindert die Handhabung des Schweißextruders bei engen und damit schwer zugänglichen Schweißstellen. Nachteilig ist außerdem das hohe Gewicht derartiger Handschweißextruder, das den Anwender auf Dauer ermüdet. Deshalb ist es oft wünschenswert, einen Handschweißextruder einzusetzen, das ein geringes Gewicht aufweist und wenig Raum einnimmt.

Eine solche Extruderschweißeinrichtung ist aus der DE 299 15 768 U1 bekannt. Bei der dort vorgeschlagenen Einrichtung sind die Plastifizierschneckeneinheit, die Heißlufterzeugungseinrichtung sowie der Antriebsmotor für den Antrieb der Extruderschnecke in einem gemeinsamen Gehäuse angeordnet, wobei eine externe, quasi stationäre Regeleinheit für die Heizungen der Plastifizierschneckeneinheit und der Heißlufterzeugungseinrichtung sowie für die Drehgeschwindigkeit des Antriebsmotors vorgesehen sind. Die Regeleinheit ist mit dem Handschweißextruder über flexible Versorgungsleitungen lösbar verbunden. Unvorteilhaft erscheint der integrierte Fluidmotor, der von einem Hydraulikdruckaggregat mit einer elektrische Hydraulikpumpe angetrieben ist, da das Hydraulikdruckaggregat ein hohes Gewicht aufweist und eine eigene, aufwändige Regelung erfordert.

Ausgehend von diesem Stand der Technik liegt der Erfindung die Aufgabe zu Grunde, einen Handschweißextruder vorzuschlagen, der eine schlanke Bauform, ein geringes Gewicht und einen elektrischen Antrieb aufweist.

Diese Aufgabe wird erfindungsgemäß durch einen Handschweißextruder mit den Merkmalen des Anspruchs 1 gelöst. Weitere vorteilhafte Ausführungsformen sind den Unteransprüchen zu entnehmen.

Bei dem erfindungsgemäßen Handschweißextruder ist das Gehäuse der Schweißeinheit stabförmig ausgebildet und weist einen vorderen Schweißabschnitt und einem daran in Längsrichtung anschließenden Haltegriff auf. In dem stabförmigen Gehäuse sind in dem Schweißabschnitt die Plastifizierschneckeneinheit sowie die Heißlufterzeugungseinrichtung und in dem Haltegriff ein Elektromotor als Antriebsmotor angeordnet. Der Elektromotor ist mit einer Welle der Extruderschnecke über ein Getriebe verbunden, wobei das Getriebe in dem Haltegriff und/oder dem Schweißabschnitt des stabförmigen Gehäuses des Handschweißextruders vorgesehen sein kann. Dabei sind die Anschlüsse für die Verbindungsleitungen zwischen der Schweißeinheit und der Versorgungseinheit in Verlängerung des Haltegriffs der Schweißeinheit an dem stabförmigen Gehäuses vorgesehen sind. Damit wird die schlanke beispielsweise zylindrische Bauform der Schweißeinheit weiter ausgeprägt, so dass der Handschweißextruder speziell für das Extrusionsschweißen an engen und damit schwer zugängliche Schweißstellen geeignet ist. Erfindungsgemäß sind flexiblen Verbindungsleitungen, beispielsweise eine Schlauchleitung für die Luftzufuhr und darin aufgenommene elektrische Verbindungsleitungen, über eine drehbare Kupplung mit der Schweißeinheit und/oder der Versorgungseinheit verbunden sind. Dies bewirkt, dass die Schweißeinheit gegenüber der Versorgungseinheit in Umfangsrichtung einfach drehbar ist, ohne dass sich die Verbindungsleitung spiralförmig aufwickeln und das Führen der Schweißeinheit, insbesondere bei Schweißarbeiten an unzugänglichen Stellen, erschweren.

Die flexiblen Verbindungsleitungen zwischen der Schweißeinheit und der Versorgungseinheit können elektrische Versorgungs- und Signalleitungen sowie Schlauchleitungen umfassen. Die Versorgungseinheit ist an sich genauso mobil wie die Schweißeinheit, wobei die Schweißeinheit unabhängig von der Versbrgungseinheit bewegt werden kann. Die Versorgungseinheit kann demzufolge für den Schweißvorgang ortsfest abgestellt, also quasi stationär betrieben werden. Dieser Maßnahme liegt die Idee zu Grunde, das Gewicht und das Volumen des Handschweißextruders so weit wie möglich zu reduzieren, indem alle nicht direkt am Schweißprozess beteiligten Komponenten des Handschweißextruders sowie die nicht unmittelbar für die Bedienung notwendigen Bedienelemente unter Bildung der Versorgungs- und Schweißeinheit voneinander getrennt sind.

In einer bevorzugten Ausführungsform des Handschweißextruders ist das Getriebe im Haltegriff angeordnet, so dass es von den Heizungen der Heißlufterzeugungseinrichtung und/oder der Plastifizierschneckeneinheit ferne liegt, wodurch die Wärmebeaufschlagung durch diese minimiert ist. Außerdem kann das Getriebe zusammen mit dem Elektromotor nach bekannter Art und Weise mittels eines Luftstroms gekühlt werden.

Vorteilhafterweise sind der vordere Schweißabschnitt und der hintere Haltegriff des stabförmigen Gehäuses im Wesentlichen zylindrisch ausgebildet. Damit wird eine langgestreckte, schlanke Bauform des Handschweißextruders erreicht, so dass dieser auch bei beengten Raumverhältnissen einsetzbar ist. Weiterer Vorteil ist, dass damit eine einfache, ergonomisch günstige Form für den Haltegriff geschaffen ist, mit einem im Wesentlichen von der Bauform des Elektromotors bestimmten Durchmesser. Die zylindrische Form des rohrförmigen Schweißabschnitts ermöglicht zudem, darin die Plastifizierschneckeneinheit sowie der Heißlufterzeugungseinrichtung konzentrisch und damit platzsparend anzuordnen. Dabei kann die Heißlufterzeugungseinrichtung neben der Plastifizierschneckeneinheit angeordnet sein oder die Plastifizierschneckeneinheit außen ganz oder teilweise konzentrisch übergreifen.

Die Plastifizierschneckeneinheit und die Heißlufterzeugungseinrichtung weisen üblicherweise unterschiedliche Betriebstemperaturen auf, wobei die Temperatur der Plastifizierschneckeneinheit wesentlich unter der Temperatur der Heißlufterzeugungseinrichtung eingestellt ist. Es hat sich als günstig erwiesen, die Plastifizierschneckeneinheit und die Heißlufterzeugungseinrichtung thermisch voneinander zu entkoppeln, um eine gegenseitige Temperaturbeeinflussung weitgehend auszuschließen. Damit sind deren Temperaturen über die jeweiligen Heizungen unabhängig voneinander einstellbar. Zur thermischen Entkopplung kann entweder ein Luftspalt oder ein anderes Isolationsmaterial zwischen der Plastifizierschneckeneinheit und der Heißlufterzeugungseinrichtung vorgesehen sein. Bei einem vorgesehen Luftspalt kann die Isolationswirkung verbessert werden, indem ein kühler Luftstrom durch den Luftspalt geleitet wird.

Von dem Schweißabschnitt des Schweißextruders geht aufgrund hoher Temperaturen die Gefahr von Verbrennungen aus. Es ist daher von Vorteil, ein gekühltes Schutzrohr an dem stabförmigen Gehäuse vorzusehen, das den Schweißabschnitt weitgehend übergreift. Das Schutzrohr wird durch einen kalten Luftstrom gekühlt, der durch einen Ringspalt zwischen dem heißem Gehäuse des Schweißabschnitts und den Schutzrohr geleitet wird. Der Luftstrom tritt aus dem Haltegriff in Richtung des Ringspaltes aus. Der Luftstrom zum Kühlen des Schutzrohrs kann von der Kaltluft für die Heißlufterzeugungseinrichtung abgezweigt werden. Es ist auch möglich, die am Getriebe und an dem Elektromotor zu der Kühlung vorbei geleitete Luft zu verwenden.

Die quasi stationäre Versorgungseinheit für den Handschweißextruder ist standfest und kann mit vorgesehenen Anschlussleitungen an bestehende Spannungs- und Druckluftquellen bzw. Gebläse oder entsprechende Zuleitungen angeschlossen werden. Die flexiblen Verbindungsleitungen sind zweckmäßigerweise zur bequemeren Handhabungen des Handschweißextruders zu einem oder mehreren Leitungspaketen, vorzugsweise zu einem einzigen Leitungspaket zusammengefasst. Zu dem Leitungspaket kann auch ein Zuführschlauch für den zu plastifizierenden Kunststoffdraht gehören. Die Versorgungsleitungen können von einer gemeinsamen Hülle umgeben sein oder durch einzelne Verbindungselemente zusammengehalten werden.

In einer Ausführungsform des erfindungsgemäßen Handschweißextruders weist die Versorgungseinheit Einstellelemente und/oder Anzeigeelemente für die Bestimmung bzw. Visualisierung der Drehzahl des Elektromotors und/oder der Temperatur des plastifizierten Kunststoffstranges und/oder der Temperatur der Heißluft und/oder der Luftzufuhr zu der Heißlufterzeugungseinrichtung auf. Die Einstellelemente und die Anzeigeelemente sind vorzugsweise digital ausgebildet, um die Einstellung und die Ablesung präzise zu ermöglichen, wobei analoge Ausführungsformen nicht ausgeschlossen sind.

Die Einstellelemente ermöglichen eine fehlerfreie Einstellung der Schweißparameter für den Handschweißextruder. Zu den Einstell- und Anzeigeelementen an der Versorgungseinheit können weitere Einstell- und Anzeigeelemente an dem Haltegriff des Handschweißextruders vorgesehen sein, die ebenfalls auf die Steuer- und/oder Regeleinrichtungen der Versorgungseinheit einwirken. Diese können zusätzlich und damit parallel zu den Einstell- und/oder Anzeigeelementen der Versorgungseinheit vorgesehen sein. Damit kann der Anwender während des Betriebs des Handschweißextruders für den Schweißprozess wichtige Parameter direkt kontrollieren und/oder geringfügig verändern, ohne den Schweißvorgang zu unterbrechen zu müssen.

Bei einer vorteilhaften Ausführungsform des Handschweißextruders weist der Haltegriff, bevorzugt an einem hinteren Ende, mindestens einen Anschluss für die Luftversorgung und/oder die Energieversorgung sowie mindestens ein Bedienelement, das als Schalter oder Einsteller ausgebildet sein kann, für den Elektromotor und/oder die Heizungen des Handschweißextruders auf. Mit dem direkt am dem Handgriff angeordneten Bedienelement ist es möglich, den Schweißvorgang mit dem Handschweißextruder kurzzeitig zu unterbrechen und wieder aufzunehmen. Außerdem können an dem Handgriff noch Anschlüsse für in das stabförmige Gehäuse integrierte Regelungssensoren sowie für eine Zuführleitung für den Kunststoffdraht vorgesehen sein,

Als Antrieb für die Plastifizierschneckeneinheit ist eine elektronische Antriebseinheit mit einem Elektromotor vorgesehen, dessen Drehzahl steuerbar ist. Dies ermöglicht einerseits eine kleine Bauform mit einem guten Volumen-Leistungs-Verhältnis und andererseits ein einstellbares, im Wesentlichen konstantes Drehmoment, wobei der Elektromotor für den Dauerbetrieb bei hohen Temperaturen geeignet ist.

Nachfolgend wird die Erfindung anhand von zwei in der Zeichnung dargestellten Ausführungsbeispielen näher erläutert. Weitere Merkmale der Erfindung ergeben sich aus der folgenden Beschreibung der Ausführungsbeispiele in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: einen ersten erfindungsgemäßen Handschweißextruder mit einer starren Anschlusskupplung in perspektivischer Ansicht;
- Figur 2: die Schweißeinheit des Handschweißextruders aus Figur 1 in einer Schnittdarstellung;
- Figur 3: einen Ausschnittsvergrößerung des vorderen Schweißabschnitts der Schweißeinheit des Handschweißextruders aus Figur 1; und
- Figur 4: einen zweiten erfindungsgemäßen Handschweißextruder mit einer drehbaren Anschlusskupplung in perspektivischer Ansicht.

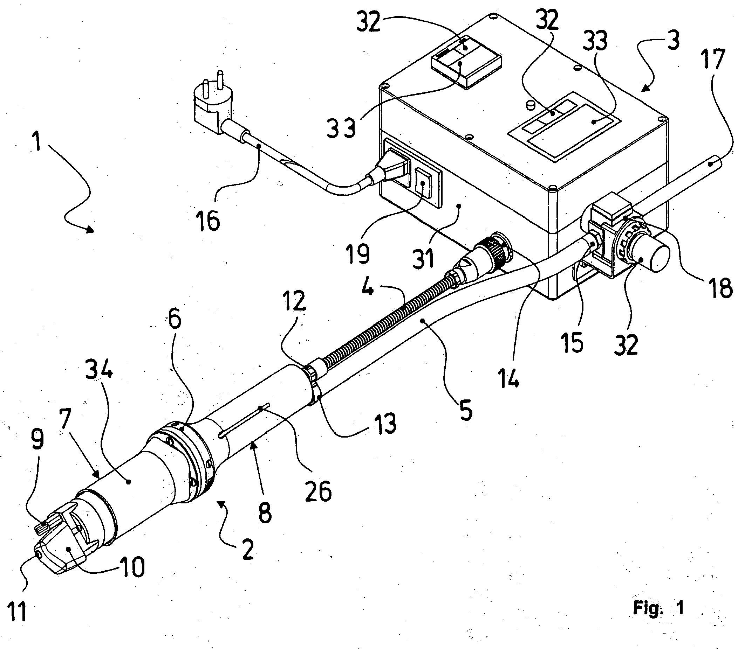

Figur 1 zeigt einen erfindungsgemäßen Handschweißextruder 1 mit einer von einer Schweißeinheit 2 getrennten Versorgungseinheit 3, wobei die Schweißeinheit 2 und die Versorgungseinheit 3 über flexible Verbindungsleitungen 4, 5 miteinander lösbar verbunden sind. Die Verbindungsleitung 4 versorgt die Schweißeinheit 2 mit elektrischer Energie und die Verbindungsleitung 5 führt der Schweißeinheit 2 komprimierte Kaltluft zu. Die Schweißeinheit 2 weist ein stabförmiges, im Wesentlichen zylindrisches Gehäuse 6 mit einem vorderen Schweißabschnitt 7 und einem hinteren Haltegriff 8 auf. Zusätzlich kann auch noch ein vom Gehäuse 6 seitlich abstehender Handgriff, wie von anderen Geräten her bekannt, vorgesehen sein.

An einem vorderen Ende des Schweißabschnittes 7 sind eine Vorwärmdüse 9 zum Austritt von Heißluft sowie ein Schweißschuh 10 mit einer Austrittsdüse 11 für einen in der Zeichnung nicht dargestellten plastifizierten Kunststoffstrang angeordnet. Des Weiteren sind an einem hinteren, der Versorgungseinheit 3 zugeordneten Ende des Haltegriffs 8 Anschlüsse 12, 13 für die Versorgungsleitungen 4, 5 vorgesehen. Entsprechende Anschlüsse 14, 15 weist auch die Versorgungseinheit 3 auf. Die Schweißeinheit 2 weist außerdem ein den Schweißabschnitt 7 übergreifendes gekühltes Schutzrohr 34 auf, das mittels der zugeführten Kaltluft, die einen dazwischen befindlichen Luftspalt 35 in Längsrichtung durchströmt, gekühlt ist.

Über die Versorgungseinheit 3 wird der Schweißeinheit 2 elektrischer Strom und Kaltluft zugeführt. Dazu kann die Versorgungseinheit 3 mittels einem elektrischen Anschlusskabel 16 und einem Luftanschlussschlauch 17 mit einer in der Figur 1 nicht gezeigten Spannungs- und mit einer Druckluftquelle oder Gebläse für Kaltluft verbunden werden. Die von der Druckluftquelle abgehende Kaltluft wird über ein Drosselventil 18 in die Schweißeinheit 2 eingeleitet. Das Drosselventil 18 dient zur Einstellung des Luftdurchsatzes durch die Schweißeinheit 2, in dem der Überdruck der Luftzufuhr veränderbar ist. Außerdem weist die Versorgungseinheit 3 einen elektrischen Ein-Aus-Schalter 19 für die zugeführte Netzspannung auf.

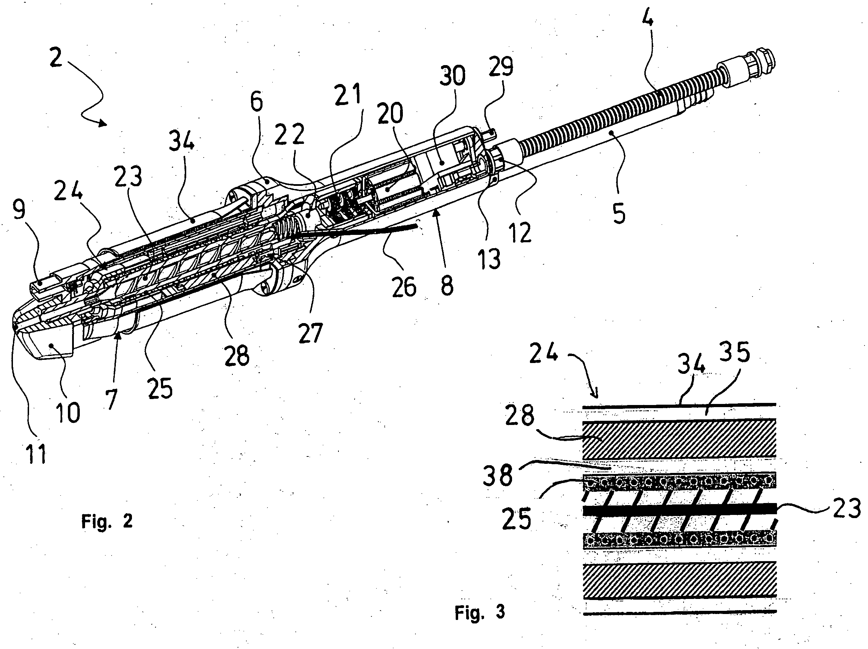

Figur 2 zeigt eine Schnittdarstellung der Schweißeinheit 2. In dem Haltegriff 8 sind ein Elektromotor 20 sowie ein Getriebe 21 angeordnet. Der Elektromotor 20 ist über das Getriebe 21 mit einer Welle 22 einer Extruderschnecke 23 verbunden, die Teil einer Plastifizierschneckeneinheit 24 ist. Die Plastifizierschneckeneinheit 24 wird mit einer Wendelheizung 25 beheizt. Beim Schweißvorgang wird ein Kunststoffdraht 26 in die Plastifizierschneckeneinheit 24 eingezogen, dort plastifiziert und am Schweißschuh 10 über die Austrittsdüse 11 von der Extruderschnecke 23 ausgepresst.

Der zylindrische Schweißabschnitt 7 weist auch eine Heißlufterzeugungseinrichtung 27 mit einem Heizelement 28 zur Erzeugung von Heißluft auf. Der Heißlufterzeugungseinrichtung 27 wird von extern mit komprimierter Kaltluft versorgt, die von der Versorgungseinheit 3 über das Drosselventil 18 zugeführt wird. Die Kaltluft tritt über den Luftanschluss 13 in den Haltegriff 8 des Gehäuses 2 ein, wird anschließend an dem Elektromotor 20 und dem Getriebe 21 zur Kühlung derselben entlanggeführt, bis sie den Schweißabschnitt 7 erreicht. Im Schweißabschnitt 7 tritt ein Teil der komprimierten Kaltluft in die Heißlufterzeugungseinrichtung 27 ein, wo sie von dem Heizelement 28 erhitzt an der Vorwärmdüse 9 als Heißluftstrahl austritt. Der andere Teil gelangt in den oben erwähnten Luftspalt 35 zur Kühlung des Schutzrohres 34.

Neben dem Druckluftanschluss 13 für die Kaltluft und dem elektrischen Anschluss 12 zur Energieversorgung der Wendelheizung 25, des Heizelements 28 und des Elektromotors 20 ist ein Schalter/Einsteller 29 als Bedienelement zum Ein- und Ausschalten und zur Drehzahlregulierung des Elektromotors 20 vorgesehen. Außerdem ist in dem Haltegriff 8 noch eine Elektronikschaltung 30 angeordnet, die die ordnungsgemäße Funktion der Schweißeinheit 2 überwacht bzw. regelt. Die Plastifizierschneckeneinheit 24 sowie der Heißlufterzeugungseinrichtung 27 sind durch einen Luftspalt 38, wie aus der Figur 3 ersichtlich, thermisch voneinander entkoppelt. Damit können die Temperaturen der Heizungen 25,28 der Plastifizierschneckeneinheit 24 sowie der Heißlufterzeugungseinrichtung 27 weitgehend unabhängig voneinander eingestellt werden. Auch ist eine Temperaturbeeinflussung der Plastifizierschneckeneinheit 24 durch die Heißlufterzeugungseinrichtung 27 nach dem Ausschalten des Handschweißextruders 1 weitgehend auszuschließen.

Die in der Figur 1 dargestellte Versorgungseinheit 3 weist in einem quaderförmigen Gehäuse 31 in der Zeichnung nicht sichtbare Steuer-/Regeleinrichtungen für die Temperaturen des plastifizierten Kunststoffstranges und der erzeugten Heißluft sowie für die Fördermenge des Kunststoffstranges auf. Dazu sind in dem Gehäuse 6 der Schweißeinheit 2 entsprechende Sensoren untergebracht, die in der Zeichnung nicht dargestellt sind. Zur Einstellung der Sollwerte sind an dem Gehäuse 31 Einstellelemente 32 für die Bestimmung der Drehzahl des Elektromotors 20 und der Bestimmung der Temperaturen der Heizungen 25, 28, der Plastifizierschneckeneinheit 24 sowie der Heißlufterzeugungseinrichtung 27 vorgesehen. Die Einstellelemente 32 können mit entsprechenden Anzeigeelementen 33 des Gehäuses 31 gekoppelt sein.

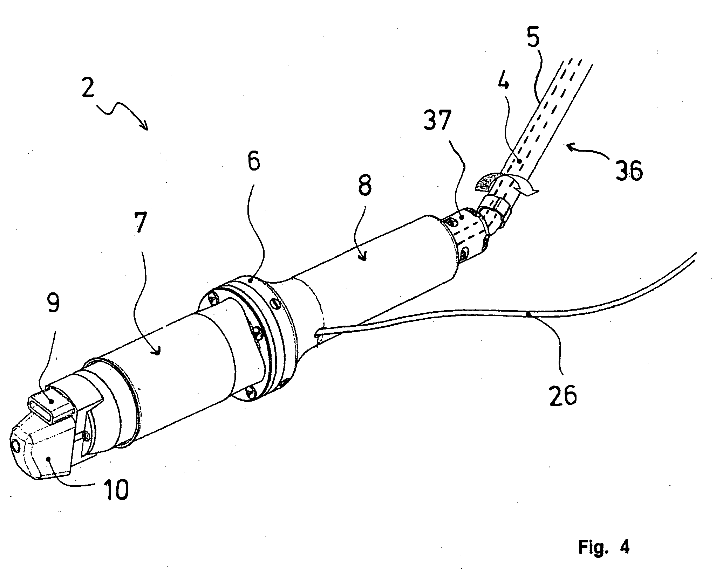

Der in Figur 4 gezeigte erfindungsgemäße Handschweißextruder 1 unterscheidet sich gegenüber dem im Figur 1 dargestellten Handschweißextruder 1 im Wesentlichen dadurch, dass die flexiblen Verbindungsleitungen 4, 5 zu der in Figur 4 nicht dargestellten Versorgungseinheit 3 als flexibles Leitungspaket 36 ausgebildet sind. In der Verbindungsleitung 5 für die Fremdluftversorgung liegt die elektrische Verbindungsleitung 4 ein. Das Leitungspaket 36, mit der Schlauchleitung 5 als Hülle, ist mittels einem drehbaren Kupplung 37 drehbar mit dem Haltegriff 8 der Schweißeinheit 2 verbunden. Das der Versorgungseinheit 3 zugeordnete, in der Zeichnung nicht gezeigte Ende des Leitungspaketes 36 kann entsprechend dem ersten Ausführungsbeispiel einen voneinander getrennten Luft- und Elektroanschluss 14, 15 aufweisen oder einen gemeinsamen Anschluss, in dem die Anschlüsse 14, 15, vorzugsweise koaxial zueinander, angeordnet sind.

## Patentansprüche

1. Handschweißextruder (1) zum Verschweißen von thermoplastischen Kunststoffmaterialien mittels einem plastifizierten Kunststoffstrang, mit einer mobilen Schweißeinheit (2) und eine quasi-stationäre Versorgungseinheit (3), die entfernt voneinander vorgesehen und mittels flexibler Verbindungsleitungen (4, 5) miteinander verbunden oder verbindbar sind, wobei die Schweißeinheit (2) eine Plastifizierschneckeneinheit (24) und einen Antriebsmotor (20), die über ein Getriebe (21) miteinander verbunden sind, und eine Heißlufterzeugungseinrichtung (27) mit externer Luftversorgung aufweist, die in einem gemeinsamen Gehäuse (6) der Schweißeinheit (2) angeordnet sind, und wobei die Versorgungseinheit (3) Steuer- und/oder Regeleinrichtungen für die Versorgung der Plastifizierschneckeneinheit (24) und/oder der Heißlufterzeugungseinrichtung (27) und/oder dem Antriebsmotor (20) aufweist,
**dadurch gekennzeichnet, dass**
das Gehäuse (6) der Schweißeinheit (2) stabförmig ausgebildet ist und einen vorderen Schweißäbschnitt (7) und einem daran in Längsrichtung anschließenden Haltegriff (8) aufweist,
im Schweißabschnitt (7) die Plastifizierschneckeneinheit (24) zusammen mit der Heißlufterzeugungseinrichtung (27) und im Haltegriff (8) der Antriebsmotor (20), der als Elektromotor (20) vorgesehen ist, angeordnet sind,
Anschlüsse (12, 13) für die flexiblen Verbindungsleitungen (4, 5) in Verlängerung des Haltegriffs (8) der Schweißeinheit (2) an dem Gehäuse (6) vorgesehen sind, und
die flexiblen Verbindungsleitungen (4, 5), über eine drehbare Kupplung (37) mit der Schweißeinheit (2) und/oder der Versorgungseinheit (3) verbunden oder verbindbar sind.

2. Handschweißextruder nach Anspruch 1, **dadurch gekennzeichnet, dass** das Getriebe (21) in dem Haltegriff (8) angeordnet ist.

3. Handschweißextruder nach Anspruch 1 oder 2, **dadurch gekennzeichnet, dass** der vordere Schweißabschnitt (7) und der hintere Haltegriff (8) des stabförmigen Gehäuses (6) im Wesentlichen zylindrisch ausgebildet sind.

4. Handschweißextruder nach Anspruch 3, **dadurch gekennzeichnet, dass** die Plastifizierschneckeneinheit (24) und die Heißlufterzeugungseinrichtung (27) thermisch voneinander, vorzugsweise durch einen dazwischen angeordneten Luftspalt (38), entkoppelt sind.

5. Handschweißextruder nach einem der vorangegangenen Ansprüche, **dadurch gekennzeichnet, dass** an dem Schweißabschnitt (7) ein gekühltes Schutzrohr (34) übergreifend angeordnet ist.

6. Handschweißextruder nach Anspruch 1, **dadurch gekennzeichnet, dass** die Verbindungsleitungen (4, 5) zu einem oder mehreren Leitungspaketen (36), vorzugsweise einem einzigen Leitungspaket (36), zusammenfasst sind.

7. Handschweißextruder nach Anspruch 6, **dadurch gekennzeichnet, dass** die Versorgungseinheit (3) Einstellelemente (32) und/oder Anzeigeelemente (33) für die Bestimmung.bzw. Visualisierung der Drehzahl des Elektromotors (20) und/oder der Temperatur des plastifizierten Kunststoffstranges und/oder der Heißluft und/oder der Luftzufuhr der Heißlufterzeugungseinrichtung (27) aufweist, die vorzugsweise digital ausgebildet sind.

8. Handschweißextruder nach einem der vorangegangenen Ansprüche, **dadurch gekennzeichnet, dass** der Haltegriff (8) mindestens einen Anschluss (12, 13) für die Luft- und/oder Energieversorgung sowie mindestens ein Bedienelement (29) für den Elektromotor (20) bzw. für Heizungen (25, 28) des Handschweißextruders (1) aufweist.

## Claims

1. Hand welding extruder (1) for welding thermoplastic materials by means of a plasticized plastic strand (26) comprising a mobile welding unit (2) and a quasistationary supply unit (3) that are disposed remotely from each other and are connected, or can be connected to each other by means of flexible connecting lines (4, 5), wherein the welding unit (2) has a plasticization worm unit (24) and a drive motor (20) being connected to each other by a gearbox (21), and with a hot air generation device (27) having an external air supply, that are disposed in a common housing (6) of the welding unit (2), wherein the supply unit (3) has control and/or adjustment devices for the supply of the plasticization worm unit (24) and/or the hot air generation device (27) and/or the drive motor (20),
**characterized in that**
the housing (6) of the welding unit (2) is bar-shaped and has a front welding segment (7) and a grab handle (8) connected thereto in the longitudinal direction, the plasticization worm unit (24) and the hot air generation device (27) are arranged together in the welding segment (7) and the drive motor (20), provided as an electric drive motor (20), is disposed in the grab handle (8),
connections (12, 13) for the flexible connecting lines (4, 5) are provided in the extension of the grab handle (8) of the welding unit (2) at the housing (6), and the flexible connecting lines (4, 5) are connected to the welding unit (2) and/or the supply unit (3) by means of a rotatable connector (37).

2. Hand welding extruder according to Claim 1, **characterized in that** the gearbox (21) is located in the grab handle (8).

3. Hand welding extruder according to Claim 1 or 2, **characterized in that** the front welding segment (7) and the rear grab handle (8) of the bar-shaped housing (6) have an essentially cylindrical shape.

4. Hand welding extruder according to Claim 3, **characterized in that** the plasticization worm unit (24) and the hot air generation device (27) are thermally disconnected, preferably by an air gap (38) located therebetween.

5. Hand welding extruder according to any one of the preceding Claims, **characterized in that** a cooled guard tube (34) is located on the welding segment (7) in an overlapping configuration.

6. Hand welding extruder according to Claim 1, **characterized in that** the connecting lines (4, 5) are combined in one or several line bundles (36), preferably a single line bundle (36).

7. Hand welding extruder according to Claim 6, **characterized in that** the supply unit (3) has adjustment elements (32) and/or display elements (33) for the setting and/or the visual display of the speed of the electric motor (20) and/or the temperature of the plasticized plastic strand and/or the air supply of the hot air generation device (27), such elements being preferably of a digital type.

8. Hand welding extruder according to any one of the preceding Claims, **characterized in that** the grab handle (8) has at least one connection (12, 13) for the air and/or energy supply, as well as at least one operating element (29) for the electric motor (20) and/or the heating systems (25, 28) of the hand welding extruder (1).

## Revendications

1. Dispositif (1) de soudage manuel par extrusion, dévolu au soudage de matières thermoplastiques au moyen d'un boudin de matériau synthétique plastifié, comprenant une unité mobile de soudage (2) et une unité d'alimentation (3) quasi stationnaire qui sont prévues avec éloignement l'une de l'autre et sont, ou peuvent être reliées l'une à l'autre au moyen de conduits flexibles de liaison (4, 5), l'unité de soudage (2) comportant une unité (24) à vis sans fin de plastification et un moteur d'entraînement (20), reliés l'un à l'autre par l'intermédiaire d'une transmission (21), et un système (27) de production d'air chaud à alimentation en air de l'extérieur, qui sont logés dans un carter commun (6) de ladite unité de soudage (2), et l'unité d'alimentation (3) étant dotée de systèmes de commande et/ou de régulation, dédiés à l'alimentation de ladite unité (24) à vis sans fin de plastification et/ou dudit système (27) de production d'air chaud et/ou dudit moteur d'entraînement (20),
**caractérisé par le fait que**
le carter (6) de l'unité de soudage (2) est réalisé en forme de barreau, et comprend une zone antérieure de soudage (7) et une poignée de maintien (8) se rattachant à cette dernière dans la direction longitudinale,
l'unité (24) à vis sans fin de plastification est installée dans ladite zone de soudage (7), conjointement au système (27) de production d'air chaud, le moteur d'entraînement (20), prévu en tant que moteur électrique (20), étant implanté dans ladite poignée de maintien (8),
des raccords (12, 13) affectés aux conduits flexibles de liaison (4, 5) sont prévus sur ledit carter (6), dans le prolongement de ladite poignée de maintien (8) de l'unité de soudage (2), et
lesdits conduits flexibles de liaison (4, 5) sont, ou peuvent être raccordés à ladite unité de soudage (2) et/ou à l'unité d'alimentation (3), par l'intermédiaire d'un accouplement rotatif (37).

2. Dispositif de soudage manuel par extrusion, selon la revendication 1, **caractérisé par le fait que** la transmission (21) est placée dans la poignée de maintien (8).

3. Dispositif de soudage manuel par extrusion, selon la revendication 1 ou 2, **caractérisé par le fait que** la zone antérieure de soudage (7) et la poignée postérieure de maintien (8) du carter (6) en forme de barreau offrent, pour l'essentiel, une réalisation cylindrique.

4. Dispositif de soudage manuel par extrusion, selon la revendication 3, **caractérisé par le fait que** l'unité (24) à vis sans fin de plastification et le système (27) de production d'air chaud sont découplés thermiquement l'un de l'autre, de préférence par un entrefer (38) réservé entre eux.

5. Dispositif de soudage manuel par extrusion, selon l'une des revendications précédentes, **caractérisé par le fait qu'**un tube protecteur (34) refroidi est mis en place sur la zone de soudage (7), en coiffant cette dernière.

6. Dispositif de soudage manuel par extrusion, selon la revendication 1, **caractérisé par le fait que** les conduits de liaison (4, 5) sont regroupés en un ou plusieurs assemblage(s) (36) de conduits, de préférence en un unique assemblage (36) de conduits.

7. Dispositif de soudage manuel par extrusion, selon la revendication 6, **caractérisé par le fait que** l'unité d'alimentation (3) est équipée d'éléments de réglage (32) et/ou d'éléments d'affichage (33) qui présentent, de préférence, une réalisation numérique et sont respectivement destinés à la détermination et à la visualisation de la vitesse angulaire du moteur électrique (20), et/ou de la température du boudin de matériau synthétique plastifié et/ou de l'air chaud, et/ou de la délivrance d'air au système (27) de production d'air chaud.

8. Dispositif de soudage manuel par extrusion, selon l'une des revendications précédentes, **caractérisé par le fait que** la poignée de maintien (8) comporte au moins un raccord (12, 13) dédié à l'alimentation en air et/ou en énergie, ainsi qu'au moins un élément d'actionnement (29) affecté, respectivement, au moteur électrique (20) et à des chauffages (25, 28) dudit dispositif (1) de soudage manuel par extrusion.
